# EUROPEAN PATENT APPLICATION

(11) **EP 1 772 552 A2**
(43) Date of publication of application: **11.04.2007**
(21) Application number: 06117536.0
(22) Date of filing: 20.07.2006
(51) Int. Cl.: D06M 15/564

(54) **Porous polytetrafluoroethylene membrane treated with an anti-staining and anti-peeling agent**

(71) Applicant: Singtex Industrial Co., Ltd., 24449 Taipei Hsien (TW)
(72) Inventor: Chen, Kuo-Chin, 24449, Taipei Hsien (TW); Huang, Ching-Nan, 24449, Taipei Hsien (TW); Wan, Lai-Hung, 24449, Taipei Hsien (TW)
(74) Representative: Chaillot, Geneviève

(57) **Abstract**

A polytetrafluoroethylene membrane is attached to a substrate (i.e. textile) and then treated with an anti-staining and anti-peeling agent by a processing method to obtain a final composite product having ventilative, moisture-releasable, water-repelling anti-staining, oil-repelling, anti-peeling and laundry-resistant efficiency.

## Description

### BACKGROUND OF THE INVENTION

### 1. Field of the Invention

The present invention relates to a porous polytetrafluoroethylene membrane, and more particularly to a polytetrafluoroethylene membrane and its relevant composite products that have excellent anti-staining and anti-peeling efficiency. Moreover, a processing method of the products is also disclosed.

### 2. Description of Related Art

Polytetrafluoroethylene is conventionally formed by polymerizing tetrafluoroethylene monomers in a chain reaction and thus simply composed of carbon and fluorine atoms without hydrogen atoms so that polytetrafluoroethylene does not react with oxygen and has characteristics such as thermal resistance, cold resistance, erosion resistance and non-stick efficiency, low friction coefficient and self-lubricating efficiency etc. Moreover, polytetrafluoroethylene does not easily fuse with other materials or not easily be stained by other materials so that it is widely applied in plastic manufacturing field.

Because polytetrafluoroethylene has foregoing advantages, manufacturers process polytetrafluoroethylene to make polytetrafluoroethylene sheet or membrane that is porous and suitable to laminate on textile or non-textile to serve as a filter as described in US patents of US5,234,739, US6,080,472, and US5,750,242.

Therefore, the processed polytetrafluoroethylene is applied widely in industrial and living products and variations applied in manufacturing processes for different products are also described in US patents of US6,702,971, US6,852,223, US5,098,625, US6,228,477, U6,410,084, US6,676,993, US6,854,603, and US4,096,227.

The manufactured products made by the processes in the mentioned patents mostly are focused on porous property and applied on cloth to obtain ventilative, moisture-releasable and water-repelling efficiency thereon.

However, the foregoing mentioned technics did not discuss about anti-staining, oil-repelling and anti-peeling properties to cloth. When the cloth gets dirty or oil stains thereon, the cloth can not be cleaned easily and completely unless using some special and strong detergents that might cause allergy to skin after contact.

Furthermore, the cloth can only be cleaned on surface but not to tiny holes therein after a long duration so that the ventilative and moisture-releasable capabilities are degraded when the tiny holes are blocked with dirt.

Moreover, some other patents, such as US patent of US 6,419,804, mention about anti-staining membrane that is applied in surface treatment, architecture, mobile industry (aluminum ring or car body), optical industry, precision machinery, information industry (DVD, CD, VCD) and plastic or rubber products (tires). However, the anti-staining membrane indeed has excellent anti-staining efficiency but no ventilative and moisture-releasable efficiency.

Once the membrane or its derivative product has the anti-staining efficiency, the membrane loses the ventilative and moisture-releasable efficiency. Oppositely, if the membrane possesses the ventilative and moisture-releasable efficiency, the anti-staining and anti-repelling efficiency is thus excluded. Therefore, manufacturers still work on developing an improved membrane to have all advantages therein and further simplifying manufacturing procedures if possible.

### SUMMARY OF THE INVENTION

A main objective of the present invention is to provide an agent applicable to treat a porous polytetrafluoroethylene membrane and its composites to make the treated polytetrafluoroethylene membrane and the composites ventilative, moisture-releasable, water-repellent, oil-repellent, and anti-peeling in laundering.

Another main objective of the present invention is to provide a treated porous polytetrafluoroethylene membrane that has originally ventilative, moisture-releasable and water-repelling efficiency and further has anti-staining, oil-repelling, anti-peeling and laundry-resistant efficiency to apply to textile, cloth, or other required substrates to compose various derivative composites.

Still another main objective of the present invention is to provide a processing method to manufacture the polytetrafluoroethylene membrane mentioned above.

To achieve the foregoing objectives, the anti-staining and anti-peeling agent comprises: 2-20(w/w%) oil-repellent polyurethane (PU) resin; 2-20(w/w%) hydrophobia assistant agent; and 60-96(w/w%) solvent.

The hydrophobia assistant agent can be selected from the group consisting of dissolvable silicon-containing compound, fluorine-based hydrophobia agent or a mixture of both.

The solvent can be selected from the group consisting of butanone, toluene, acetone, water, dimethyl formamide or a mixture thereof.

The treated porous polytetrafluoroethylene membrane comprises: a porous polytetrafluoroethylene membrane with a top face and a bottom face; and a coating layer coated on at least one face of the porous polytetrafluoroethylene membrane and made of an anti-staining and anti-peeling agent, wherein the anti-staining and anti-peeling agent is of 6-20g/m² in quantity.

The processing method of a porous polytetrafluoroethylene membrane comprises steps of:
obtaining the porous polytetrafluoroethylene membrane;
performing an anti-staining and anti-peeling treatment to make the porous polytetrafluoroethylene membrane to contain an anti-staining and anti-peeling agent; and
baking the porous polytetrafluoroethylene membrane to dry the anti-staining and anti-peeling agent.

In this processing method, a step of reeling can be added after baking to make the porous polytetrafluoroethylene membrane shaped into a roll.
* The step of performing the anti-staining and anti-peeling treatment can be to coat the anti-staining and anti-peeling agent on the porous polytetrafluoroethylene membrane with a quantity of 6-20g/m²; the step of baking can be performed at 120-180°C temperature for 30-180 seconds.
   This step of performing the anti-staining and anti-peeling treatment can be performed by a quantity-controllable coating device.
* The step of performing the anti-staining and anti-peeling treatment can be to soak the porous polytetrafluoroethylene membrane into the anti-staining and anti-peeling agent to obtain 6-20g/m² quantity; the step of baking is performed at 120-180°C temperature for 30-180 seconds.
   This step of performing the anti-staining and anti-peeling treatment can be performed by a soaking device comprising:
   a roller transporting the porous polytetrafluoroethylene membrane;
   a soaking tank receiving the porous polytetrafluoroethylene membrane from the roller and storing the anti-staining and anti-peeling agent;
   a pressing roller pressing the porous polytetrafluoroethylene membrane to be completely soaked into the anti-staining and anti-peeling agent; and
   a pair of scraping rollers removing excessive quantity of the anti-staining and anti-peeling agent from the porous
   polytetrafluoroethylene membrane after soaking.
   The porous polytetrafluoroethylene membrane can be of 0.02-0.04mm; the step of performing the anti-staining and anti-peeling treatment can be to coat or soak the porous polytetrafluoroethylene membrane with 6-20g/m² of the anti-staining and anti-peeling agent;
   the step of baking can be to treat the porous polytetrafluoroethylene membrane at 120-180°C temperature for 30-180 seconds.
   The anti-staining and anti-peeling agent can comprise:
   2-20(w/w%) oil-repellent polyurethane (PU) resin;
   2-20(w/w%) hydrophobia assistant agent; and
   60-96(w/w%) solvent;
   wherein, the hydrophobia assistant agent is selected from the group consisting of dissolvable silicon-containing compound, fluorine-based hydrophobia agent or a mixture of both;
   wherein, the solvent is selected from the group consisting of butanone, toluene, acetone, water, dimethyl formamide or a mixture thereof.

By providing the agent and processing method, the treated porous polytetrafluoroethylene membrane can have further efficiency such as anti-peeling, anti-staining capabilities and laundry-resistance.

Further benefits and advantages of the present invention will become apparent after a careful reading of the detailed description with appropriate reference to the accompanying drawings.

### BRIEF DESCRIPTION OF THE DRAWINGS

Fig. 1 shows schematic blocks illustrating a processing method in accordance with the present invention;
Fig. 2 is a schematic drawing showing operational flow of one embodiment of an anti-staining and anti-peeling treatment in accordance with the Fig 1;
Fig. 3 is a schematic drawing showing operational flow of another embodiment of the anti-staining and anti-peeling treatment in accordance with Fig.1;
Fig. 4 is an electro-microscope picture of a porous polytetrafluoroethylene membrane without having the anti-staining and anti-repelling treatment;
Fig. 5 is an electro-microscope picture of the treated porous polytetrafluoroethylene membrane after having the anti-staining and anti-repelling treatment; and
Fig. 6 is an electro-microscope picture of a composite of the treated porous polytetrafluoroethylene membrane combined with a textile substrate.

### DETAILED DESCRIPTION OF THE PREFERRED EMBODIMENT

A treated polytetrafluoroethylene membrane in accordance with the present invention is a porous polytetrafluoroethylene membrane treated with an anti-staining and anti-peeling agent and then selectively attached to a substrate (i.e. textile) by a processing method to obtain a final composite product having ventilative, moisture-releasable, water-repelling anti-staining, oil-repelling, anti-peeling and laundry-resistant efficiency.

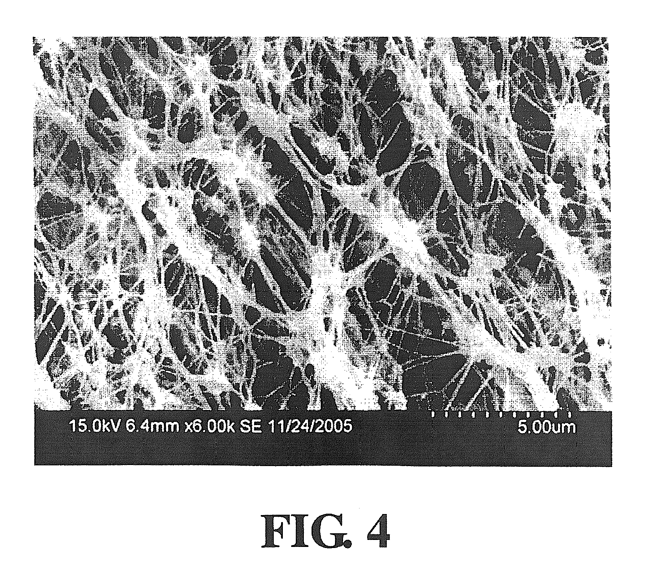

First, an untreated porous polytetrafluoroethylene membrane is observed with a high-resolution scanning electron microscope (SEM) and taken a SEM picture as shown in Fig. 4, wherein the fibers and nodes are obvious. After treating under different temperature or extension rates, the fibers and nodes are deformed apparently. For example, the fibers extend and the nodes split into smaller ones under high extension rates so that the membrane is changed from micrometer grade into nanometer grade. When the nano-membrane applies to textile or cloth, the textile or cloth thus possesses ventilative, moisture-releasable and water-repelling efficiency.

Therefore, the feature of the present invention is to combine the untreated porous polytetrafluoroethylene membrane with an anti-staining and anti-peeling agent and then carry out a processing method to keep the ventilative, moisture-releasable and water-repelling efficiency and to further obtain oil-repelling, anti-staining and anti-peeling efficiency. Moreover, the manufacturing procedures are simplified to increase yield and reduce failure rate.

The anti-staining and anti-peeling agent in the present invention is substantially composed of 2-20(w/w%) oil-repellent polyurethane (PU) resin, 2-20(w/w%) hydrophobia assistant agent and 60-96(w/w%) solvent. The anti-staining and anti-peeling agent is stirred for 10-30 minutes. The hydrophobia assistant agent is selected from the group consisting of dissolvable silicon-containing compound (such as silicon), fluorine-based hydrophobia agent or a mixture of both. The solvent is selected from the group consisting of butanone, toluene, acetone, water, dimethyl formamide or a mixture thereof. By having the oil-repellent and hydrophobia efficiency, the anti-staining and anti-peeling agent with a proper proportion is coated to the untreated porous polytetrafluoroethylene membrane and then dried at 120-180°C temperature for 30-180 seconds to make the membrane further have anti-staining, oil-repelling, anti-peeling and laundry-resistant efficiency.

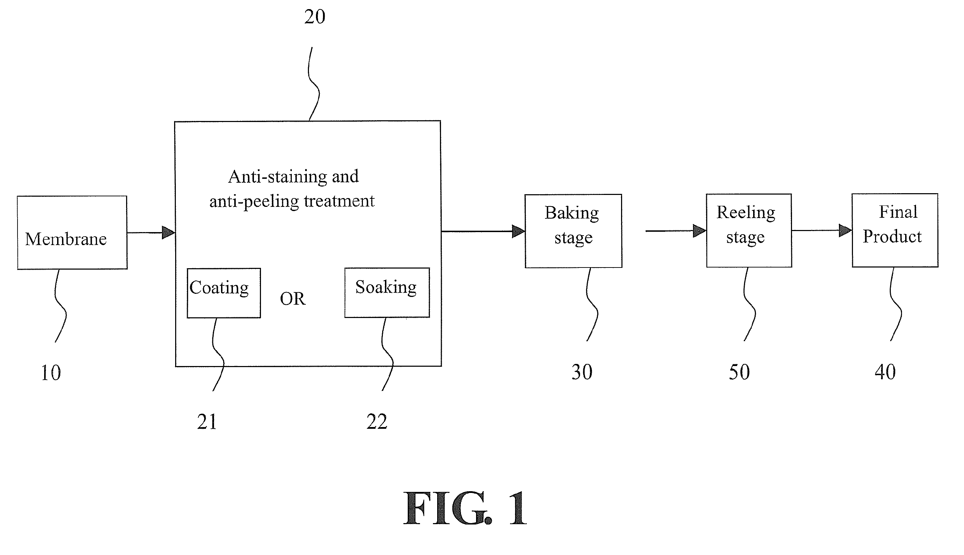

As shown in Fig. 1, the processing method is schematically shown in illustrative blocks. The membrane 10 (untreated) is subjected to an anti-staining and anti-peeling treatment 20 and then dried in a baking stage 30 to obtain a treated membrane. During the route between the backing stage 30 and output of the treated membrane, a reeling stage 50 is carried out to shape the treated membrane 10 into a roll with a desired size to serve as a final product 40.

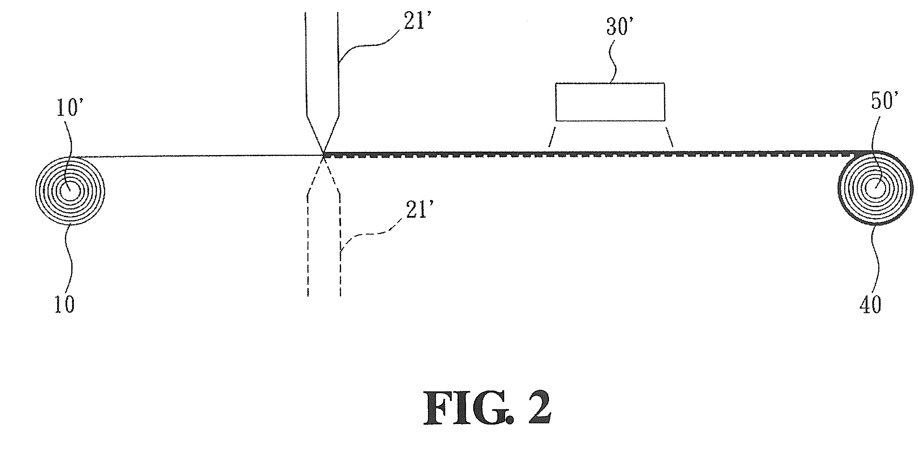

As shown in Figs. 1 and 2, the membrane 10 in the processing method is common porous polytetrafluoroethylene membrane and commercially available continuous belt material. The membrane 10 is mounted on a feeding device 10' and transported into a coating device 21' for the anti-staining and anti-peeling treatment 20 performed by coating 21. Quantity of the anti-staining and anti-peeling agent on an upper or/and lower surface on the membrane 10 is of 6-20g/m². Then, the coated membrane 10 is transported into a baking device 30' and treated at 120-180°C temperature for 30-180 seconds therein. Lastly, the membrane 10 is reeled up by a reeling device 50'to obtain the final product 40 of porous polytetrafluoroethylene membrane having anti-staining and anti-peeling efficiency.

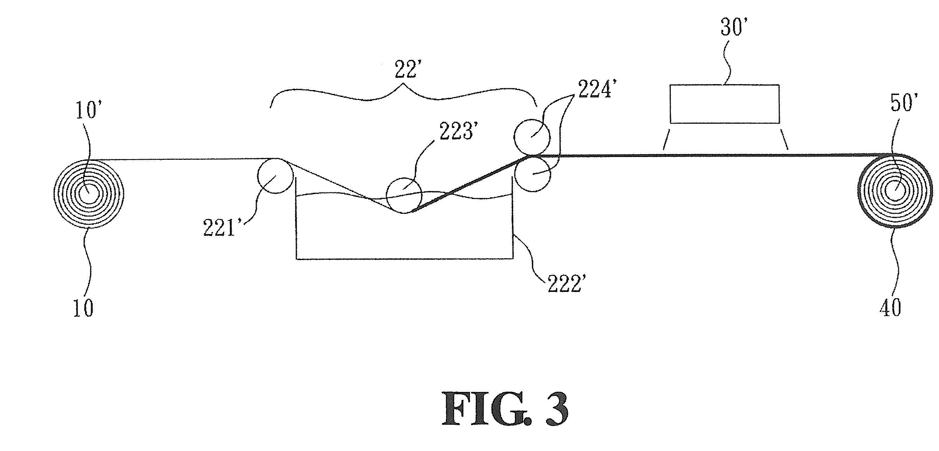

As shown in Figs. 1 and 3, another preferred embodiment of the processing method in accordance the present invention is disclosed. The membrane 10 is mounted on a feeding device 10' and transported into a soaking device 22' for the anti-staining and anti-peeling treatment 20 performed by soaking 22. Quantity of the anti-staining and anti-peeling agent attached to the membrane 10 is of 6-20g/m². Then, the soaked membrane 10 is transported into a baking device 30' and treated at 120-180°C temperature for 30-180 seconds therein. Lastly, the treated membrane is reeled up by a reeling device 50'to obtain the final product 40 of the treated porous polytetrafluoroethylene membrane having anti-staining and anti-peeling efficiency. Wherein, differences between the soaking device 22' and coating device 21' are that the coating device 21' is controllable in quantity of the anti-staining and anti-peeling agent coating on surfaces of the membrane 10 by a conventional quantity-controllable device, but the soaking device 22' is not. In the soaking device 22', the membrane 10 is transported by a roller 221' into a soaking tank 222' and pressed down by a pressing roller 223' to make the membrane 10 stay in the anti-staining and anti-peeling agent. Then, a pair of scraping rollers 224' removes excessive anti-staining and anti-peeling agent from the membrane 10 to make the anti-staining and anti-peeling agent evenly and moderately disturbed thereon.

Relevance conditions between the devices and the processing method mentioned above and operational conditions are further illustrated in the following:
- membrane: commercially purchasable porous polytetrafluoroethylene membrane with 0.02-0.04 mm thickness.
- anti-staining and anti-peeling treatment: the membrane is coated or soaked to smear with the anti-staining and anti-peeling agent in quantity of 6-20 g/m².
- baking stage: after treating with the anti-staining and anti-peeling agent, the membrane is dried at 120-180°C temperature for 30-180 seconds to remove water and solvent therein.
- final product: by practicing the processing method, the obtained porous polytetrafluoroethylene membrane with anti-staining and anti-peeling efficiency has 0.03-0.06mm thickness.

Because the treated porous polytetrafluoroethylene membrane has ventilative, moisture-releasable, water-repelling, anti-staining, oil-repelling, anti-peeling and laundry-resistant efficiency after the processing method, the final product 40 can be applied to specific substrate such as textile or cloth.

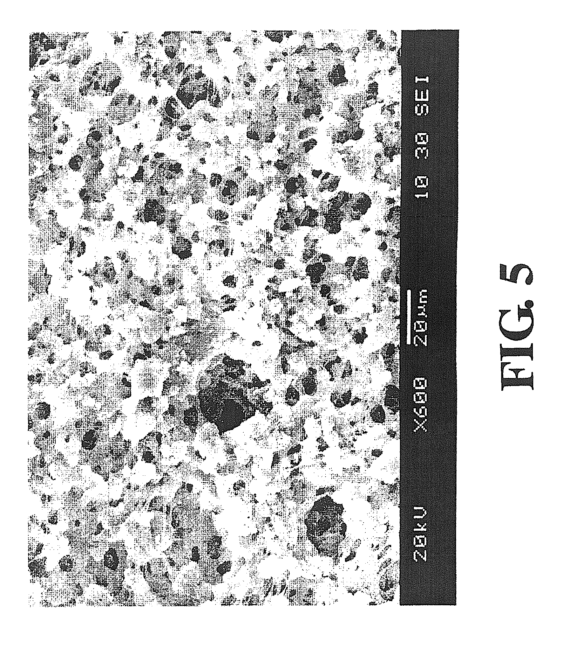

As shown in Figs. 4 and 5, both are SEM picture of the membrane 10 before and after the anti-staining and anti-peeling treatment. According to the pictures, the membrane 10 has clear nodes and fibers before the treatment (as shown in Fig. 4). However, the treated membrane has denser distribution of the nodes and fibers (see Fig. 5) in comparison with the one before the treatment so that the final product has the originally ventilative, moisture-releasable and water-repelling efficiency and further has anti-staining, oil-repelling, anti-peeling and laundry-resistant efficiency to enhance applicable possibility in different fields.

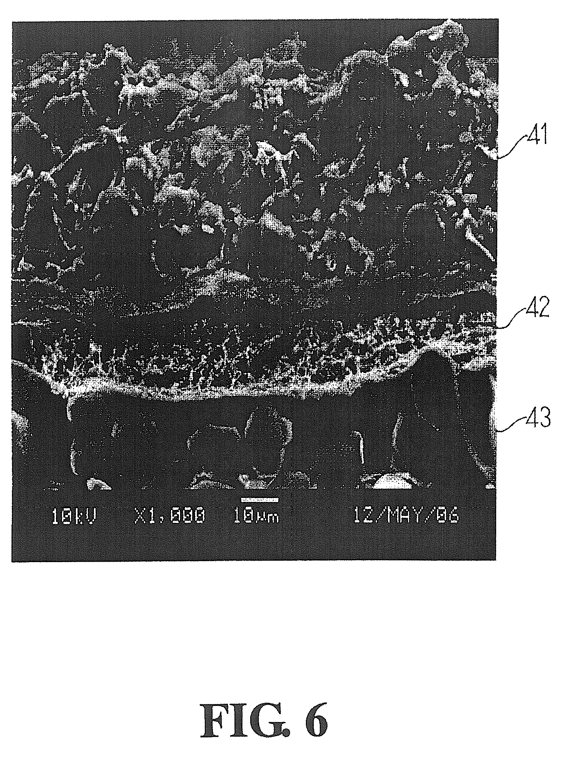

As shown in Fig. 6, the raw porous polytetrafluoroethylene membrane 10 is processed by coating 21 or soaking to obtain 6-20 g/m² of the anti-staining and anti-peeling agent on upper and/or lower surfaces or permeated inside. The final produce 40 can be further applied to textile to improve efficiency. In Fig. 6, the final produce 40 comprises the porous polytetrafluoroethylene membrane 42 and a coating layer 41 and is further attached to a textile substrate 43 to perform a composite cloth, wherein the coating layer 41 is made of the anti-staining and anti-peeling agent.

The composite cloth (Sample C10) composed of the textile substrate and the treated porous polytetrafluoroethylene membrane was tested under standard procedure, such as ASTM(American Society for Testing and Materials Standards), JIS (Japanese Industrial Standards), and AATCC (American Assoc of Textile Chemists and Colorists), to compare to a cloth without the anti-staining and anti-peeling treatment. The comparison result is shown in the following Table 1.

**Table 1**

| Sample | Type | Characteristic | Wind-proof 125pa (cfm) | Water vapor transmission (g/m²X24hrs)n | Water-resistance (mmH₂O) | Oil-resistance |
|---|---|---|---|---|---|---|
| | | | ASTM D737-1996 | JIS L1099-1933 A1 | JIS L1092: 1998-6.1. (a) | AATCC-118 |
| Untreated | Film | Light, soft | 1.25 | 10083 | 18800 | Fail |
| C10 | Film | 0.1mm, light, soft | 0.02-1 | 5000-15000 | 5000-20000 | 3-7 |

According to above Table 1, the untreated cloth has no oil repellency at all but the final product in this invention does. Moreover, wind-proof efficiency, water-repelling and moisture-releasable efficiency are also verified.

Table 2 in the following shows laundry-resistance test results of the composite cloth and the untreated cloth in pieces of different thicknesses that all tested after 5, 15, and 25 laundry circulations.

**Table 2**

| Sample | Thickness | Water resistance(mmH₂O) | | | |
|---|---|---|---|---|---|
| | | Original | 5X | 15X | 25X |
| F15-1 | 15 | 14650 | 10250 | 7500 | 5800 |
| | 30 | 16000 | 12000 | 10250 | 6950 |
| | 45 | 17800 | 14650 | 12250 | 8750 |
| F15-2 | 15 | 10200 | 12200 | 8200 | 6700 |
| | 30 | 12400 | 14800 | 11850 | 7850 |
| | 45 | 15650 | 14050 | 13000 | 8350 |
| F15-3 | 15 | 12650 | 9250 | 6500 | 5000 |
| | 30 | 14000 | 10000 | 9250 | 6950 |
| | 45 | 15800 | 12650 | 11550 | 8750 |
| F15-4 | 15 | 9200 | 8200 | 7200 | 5700 |
| | 30 | 10400 | 9800 | 8850 | 6550 |
| | 45 | 12250 | 10050 | 9000 | 7350 |
| F15-5 | 15 | 10050 | 9250 | 6500 | 5000 |
| | 30 | 12000 | 10000 | 9250 | 6950 |
| | 45 | 13800 | 12650 | 11550 | 8750 |
| F15-6 | 15 | 8200 | 7200 | 6200 | 4400 |
| | 30 | 11400 | 9800 | 7850 | 6850 |
| | 45 | 14250 | 10050 | 9220 | 8050 |

According to above description, the composite cloth made of the treated porous polytetrafluoroethylene with the textile substrate has further anti-staining, oil-repelling, anti-peeling and laundry-resistant efficiency without losing originally ventilative, moisture-releasable and water-repelling efficiency and is thus suitable for various materials including textile, non-textile, clothing, or more to make special composites.

Particularly, the composite cloth in the present invention was tested by an oil-drop test, wherein the oil was dropped onto the composite cloth. It was observed that the oil drops are not absorbed by the composite cloth of cloth but kept still drop-shapes on surfaces thereon. Therefore, the oil drops can be easily wiped out by absorbing paper or cloth.

With regard to the laundry-resistance text, the composite cloth still kept the ventilative, moisture-releasable, water-repelling anti-staining, oil-repelling, anti-peeling and laundry-resistant efficiency after repeated laundry circulations with plenty times.

Although this invention has been described in its preferred form with a certain degree of particularity, it is understood that the present invention of the preferred form has been made only by way of example and that numerous changes in the details of construction and the combination and arrangement of parts any be resorted to without departing from the spirit and scope of the invention.

## Claims

1. An anti-staining and anti-peeling agent comprising:
2-20(w/w%) oil-repellent polyurethane (PU) resin;
2-20(w/w%) hydrophobia assistant agent; and
60-96(w/w%) solvent.

2. The anti-staining and anti-peeling agent as claimed in claim 1, wherein the hydrophobia assistant agent is selected from the group consisting of dissolvable silicon-containing compound, fluorine-based hydrophobia agent or a mixture of both.

3. The anti-staining and anti-peeling agent as claimed in claim 1, wherein the solvent is selected from the group consisting of butanone, toluene, acetone, water, dimethyl formamide or a mixture thereof.

4. A treated porous polytetrafluoroethylene membrane comprising:
a porous polytetrafluoroethylene membrane with a top face and a bottom face;
a coating layer coated on at least one face of the porous polytetrafluoroethylene membrane and made of an anti-staining and anti-peeling agent, wherein the anti-staining and anti-peeling agent is of 6-20g/m² in quantity.

5. The treated porous polytetrafluoroethylene membrane as claimed in claim 4, wherein the anti-staining and anti-peeling agent comprises:
2-20(w/w%) oil-repellent polyurethane (PU) resin;
2-20(w/w%) hydrophobia assistant agent; and
60-96(w/w%) solvent;
wherein, the hydrophobia assistant agent is selected from the group consisting of dissolvable silicon-containing compound, fluorine-based hydrophobia agent or a mixture of both;
wherein, the solvent is selected from the group consisting of butanone, toluene, acetone, water, dimethyl formamide or a mixture thereof.

6. A processing method of a porous polytetrafluoroethylene membrane comprising steps of:
obtaining the porous polytetrafluoroethylene membrane;
performing an anti-staining and anti-peeling treatment to make the porous polytetrafluoroethylene membrane to contain an anti-staining and anti-peeling agent; and
baking the porous polytetrafluoroethylene membrane to dry the anti-staining and anti-peeling agent.

7. The processing method as claimed in claim 6, wherein a step of reeling is added after baking to make the porous polytetrafluoroethylene membrane shaped into a roll.

8. The processing method as claimed in claim 6, wherein the step of performing the anti-staining and anti-peeling treatment is to coat the anti-staining and anti-peeling agent on the porous polytetrafluoroethylene membrane with a quantity of 6-20g/m²;
the step of baking is performed at 120-180°C temperature for 30-180 seconds.

9. The processing method as claimed in claim 6, wherein the step of performing the anti-staining and anti-peeling treatment is to soak the porous polytetrafluoroethylene membrane into the anti-staining and anti-peeling agent to obtain 6-20g/m² quantity;
the step of baking is performed at 120-180°C temperature for 30-180 seconds.

10. The processing method as claimed in claim 8, wherein the step of performing the anti-staining and anti-peeling treatment is performed by a quantity-controllable coating device.

11. The processing method as claimed in claim 9, wherein the step of performing the anti-staining and anti-peeling treatment is performed by a soaking device comprising:
a roller transporting the porous polytetrafluoroethylene membrane;
a soaking tank receiving the porous polytetrafluoroethylene membrane from the roller and storing the anti-staining and anti-peeling agent;
a pressing roller pressing the porous polytetrafluoroethylene membrane to be completely soaked into the anti-staining and anti-peeling agent; and
a pair of scraping rollers removing excessive quantity of the anti-staining and anti-peeling agent from the porous polytetrafluoroethylene membrane after soaking;

12. The processing method as claimed in claim 9, wherein the porous polytetrafluoroethylene membrane is of 0.02-0.04mm;
the step of performing the anti-staining and anti-peeling treatment is to coat or soak the porous polytetrafluoroethylene membrane with 6-20g/m² of the anti-staining and anti-peeling agent;
the step of baking is to treat the porous polytetrafluoroethylene membrane at 120-180°C temperature for 30-180 seconds.

13. The processing method as claimed in claim 9, wherein the anti-staining and anti-peeling agent comprises:
2-20(w/w%) oil-repellent polyurethane (PU) resin;
2-20(w/w%) hydrophobia assistant agent; and
60-96(w/w%) solvent;
wherein, the hydrophobia assistant agent is selected from the group consisting of dissolvable silicon-containing compound, fluorine-based hydrophobia agent or a mixture of both;
wherein, the solvent is selected from the group consisting of butanone, toluene, acetone, water, dimethyl formamide or a mixture thereof.
